# EUROPÄISCHE PATENTSCHRIFT

(11) **EP 0 873 890 B1**
(45) Veröffentlichungstag und Bekanntmachung des Hinweises auf die Patenterteilung: **03.07.2002**
(21) Anmeldenummer: 98109679.5
(22) Anmeldetag: 02.04.1998
(51) Int. Cl.: B60D 1/06, B60D 1/64, H01R 13/625

(54) **Baugruppe**
Subassembly
Sous-groupe

(30) Priorität: 14.04.1997 DE 19715469
(43) Veröffentlichungstag der Anmeldung: 28.10.1998
(62) Teilanmeldung aus: 98106023.9
(73) Patentinhaber: ORIS FAHRZEUGTEILE HANS RIEHLE GmbH, 71696 Möglingen (DE)
(72) Erfinder: Riehle, Hans, 71638 Ludwigsburg (DE)
(74) Vertreter: Hoeger, Stellrecht & Partner

(56) Entgegenhaltungen:
- EP-A- 0 544 630
- DE-A- 4 301 506
- US-A- 2 658 185
- US-A- 3 473 826

## Beschreibung

Die Erfindung betrifft eine Baugruppe, umfassend einen Kugelhals für eine Anhängekupplung für Kraftfahrzeuge, insbesondere Personenkraftfahrzeuge, der in einem zwischen einer Halterung und einer Kupplungskugel liegenden Abschnitt mit einer Ausnehmung versehen ist, und eine Kontakteinheit, welche von einer seitlich des Kugelhalses liegenden Öffnung in den Abschnitt eindringt und welche mit einer Einstecköffnung, mit einem Deckel zum Verschließen der Einstecköffnung versehen ist.

Aus der US 3,473,826 ist eine derartige Baugruppe bekannt, wobei bei dieser der Kugelhals als hohles Rohr ausgebildet ist, auf welches die Kontakteinheit seitlich aufgesetzt ist und die Kabel durch den Hohlraum des Rohrs zu der Steckdose geführt sind.

Aus der EP A2 0 544 630 ist eine Steckverbindung für Kraftfahrzeuge bekannt, bei welcher die Steckdose mit einem Montageflansch versehen ist.

Der Erfindung liegt daher die Aufgabe zugrunde, eine Lösung zu finden, bei welcher die Kontakteinheit raumsparend und unauffällig angeordnet ist.

Diese Aufgabe wird bei einer Baugruppe der eingangs beschriebenen Art erfindungsgemäß dadurch gelöst, daß die Kontakteinheit ein Isoliergehäuse und einen in dem Isoliergehäuse angeordneten sowie elektrische Kontakte tragenden Kontakteinsatz aufweist, daß das Isoliergehäuse so ausgebildet ist, daß es zumindest mit einem Teilbereich in die Ausnehmung einsetzbar ist, und daß ein Zuleitungskabel im wesentlichen quer oder schräg zu einer quer zur Krümmungsebene des Kugelhalses verlaufenden Querachse in das Isoliergehäuse eintritt.

Der Vorteil der erfindungsgemäßen Lösung ist darin zu sehen, daß mit dieser einerseits die Kontakteinheit an einem wesentlich besser zugänglichen Ort angeordnet ist, so daß eine Herstellung einer elektrischen Verbindung zwischen Kraftfahrzeug und Anhänger viel leichter und besser einsehbar hergestellt werden kann.

Darüber hinaus hat die erfindungsgemäße Lösung noch den großen Vorteil, daß sie aufgrund der Tatsache, daß die Kontakteinheit zumindest mit einem Teilbereich des Isoliergehäuses in einer Ausnehmung des Kugelhalses angeordnet ist, einerseits wenig auffällig angeordnet und andererseits gegen mechanische Beschädigungen geschützt ist, da der Kugelhals selbst aufgrund der an diesem zwangsläufig wirkenden Kräfte aus sehr steifem Material hergestellt ist und damit gleichzeitig einen optimalen Schutz des Isoliergehäuses der Kontakteinheit gewährleistet.

Diese Lösung ermöglicht es auch, das Isoliergehäuse der Kontakteinheit im Gegensatz zu den bislang bekannten Kontakteinheiten einfacher und weniger robust und somit räumlich kleiner auszuführen, da im Gegensatz zu den bislang bekannten Lösungen das Isoliergehäuse der Kontakteinheit nicht gleichzeitig ein mechanisches Schutzgehäuse darzustellen braucht, sondern lediglich die Aufgabe hat, eine elektrische Isolation zwischen einem Inneren der Kontakteinheit, in welchem der Kontaktträger angeordnet ist, und dem Kugelhals zu bewirken.

Mit der in den Kugelhals integrierten Ausnehmung zur Aufnahme des Isoliergehäuses der Kontakteinheit wird somit durch den Kugelhals selbst ein optimaler Schutz der Kontakteinheit gegen mechanische Beschädigungen gewährleistet, so daß die Kontakteinheit ihrerseits selbst wieder kleiner und somit raumsparender ausgebaut werden kann, wodurch wiederum die Integration derselben in den Kugelhals und somit deren optisch unauffällige Anordnung erleichtert wird.

Ferner ist eine besonders günstige Einbausituation dadurch erreicht, daß das Zuleitungskabel im wesentlichen quer oder schräg zur Querachse in das Isoliergehäuse eintritt.

Besonders vorteilhaft ist es, wenn das Isoliergehäuse einen den Deckel tragenden Teilbereich aufweist, welcher in Fortsetzung des in die Ausnehmung einsetzbaren Teilbereichs angeordnet ist.

Somit ist, insbesondere um im Bereich des Deckels eine gute zugänglichkeit zu erhalten, vorteilhafterweise vorgesehen, daß das Isoliergehäuse mit seinem den Deckel tragenden Teilbereich über die Öffnung der Ausnehmung seitlich übersteht. Diese Lösung hat den Vorteil, daß damit auch die Möglichkeit gegeben ist, den Deckel größer als den in die Ausnehmung hineinragenden Abschnitt des Isoliergehäuses auszubilden, so daß der Deckel in einfacher Weise das Isoliergehäuse im Bereich einer Einstecköffnung dichtend ausgebildet werden kann.

Um den Deckel des Gehäuses möglichst vorteilhaft anzuordnen ist vorgesehen, daß die Gehäusehülse in dem über die Öffnung seitlich überstehenden Teilbereich ein auf deren Außenseite angeordnetes Schwenklager für den Deckel trägt. Damit stellt das Schwenklager keine Erweiterung der radialen Dimension der Gehäusehülse in dem Bereich dar, in dem diese in die Ausnehmung eingesteckt wird, sondern lediglich in dem überstehenden Bereich und schafft somit die Möglichkeit, die Ausnehmung im Kugelhals möglichst klein auszuführen.

Bei einem besonders vorteilhaften Ausführungsbeispiel ist das Isoliergehäuse so ausgebildet, daß es in dem in die Ausnehmung einsetzbaren Teilbereich eine Außenmantelfläche aufweist, welche beim Einsetzen in die Ausnehmung an deren Wandfläche anlegbar ist. Damit ist eine einfache Möglichkeit zur Fixierung des Isoliergehäuses in der Ausnehmung geschaffen.

Besonders günstig läßt sich das Isoliergehäuse dann formen, wenn dieses ein Schwenklager für den Deckel aufweist, welches radial über die Außenmantelfläche des in die Ausnehmung einsetzbaren Teilbereichs übersteht, so daß auch zur drehbaren Lagerung des Deckels ausreichend Raum vorhanden ist, ohne den Querschnitt des in die Ausnehmung einsetzbaren Teilbereichs unnötig groß werden zu lassen.

Eine besonders vorteilhafte Variante der erfindungsgemäßen Lösung sieht vor, daß das Isoliergehäuse in seinem in die Ausnehmung einsetzbaren Teilbereich eine Gehäusehülse aufweist.

Vorzugsweise hat dabei die Gehäusehülse eine zylindrische Außenkontur.

Eine derartige Gehäusehülse ist besonders vorteilhaft insoweit, als sie eine vorteilhafte Anordnung des Kontakteinsatzes zuläßt und andererseits in radialer Richtung zur Längsachse des Isoliergehäuses platzsparend ausgebildet werden kann.

Insbesondere ist dabei vorgesehen, daß die Gehäusehülse des Isoliergehäuses die Außenmantelfläche bildet, mit welcher dieses in die Ausnehmung einsetzbar ist.

Eine konstruktiv besonders einfache Lösung läßt sich dann schaffen, wenn die Gehäusehülse sich zu dem den Deckel tragenden Teilbereich erstreckt und somit auch noch einen Teil des den Deckel tragenden Teilbereichs bildet.

Vorzugsweise ist dabei vorgesehen, daß die Gehäusehülse in dem den Deckel tragenden Teilbereich auf ihrer Außenseite, das heißt radial überstehend über die Außenkontur, das Schwenklager für den Deckel trägt.

Eine besonders vorteilhafte Ausbildung des Schwenklagers für den Deckel sieht vor, daß dieses einstückig an das Isoliergehäuse angeformt ist.

Um eine möglichst klein bauende Kontakteinheit zu erhalten, insbesondere eine Kontakteinheit, welche mit dem in die Ausnehmung einsteckbaren Teilbereich einen möglichst kleinen Durchmesser aufweist, ist vorgesehen, daß ein Außendurchmesser der Gehäusehülse ungefähr einem Durchmesser der Einstecköffnung entspricht, das heißt, daß die Gehäusehülse sich in radialer Richtung lediglich um eine für deren Stabilität erforderliche Wandstärke über den Durchmesser der Einstecköffnung hinaus erstreckt und somit den minimalen erforderlichen Außendurchmesser erreicht, wenn man davon ausgeht, daß die Größe der Einsteckung aufgrund eines beispielsweise einzusteckenden Normsteckers fest vorgegeben ist.

Um die Kontakteinheit bei nicht eingestecktem Stecker möglichst gegenüber der Umgebung geschützt zu verschließen, ist vorzugsweise vorgesehen, daß die Gehäusehülse einen die Einstecköffnung umschließenden Rand bildet, an welchem eine Dichtung des Deckels anlegbar ist.

Eine besonders optimale Anordnung der erfindungsgemäßen Kontakteinheit ist dann gegeben, wenn der in die Ausnehmung einsetzbare Teilbereich des Isoliergehäuses eine Länge aufweist, welche mindestens die Hälfte der axialen Länge des Isoliergehäuses beträgt, so daß das Isoliergehäuse nur maximal mit der Hälfte seiner axialen Länge über den mit der Ausnehmung versehenen Abschnitt des Kugelhalses übersteht.

Vorzugsweise ist dabei das Isoliergehäuse so ausgebildet, daß es eine derartige axiale Länge aufweist, daß es beiderseits der Ausnehmung über diese übersteht.

Insbesondere ist dies dadurch realisierbar, daß das Isoliergehäuse über den in die Ausnehmung einsetzbaren Teilbereich überstehende Teilbereiche aufweist.

Hinsichtlich der Verankerung der Kontakteinheit an dem Kugelhals wurden bislang keine näheren Angaben gemacht. Beispielsweise wäre es denkbar, die Kontakteinheit kraftschlüssig in dem Kugelhals zu verankern. Besonders vorteilhaft ist jedoch eine Lösung bei welcher das Isoliergehäuse formschlüssig an dem Kugelhals verankert ist.

Die Art der formschlüssigen Verankerung läßt sich in unterschiedlichster Art und Weise ausführen.

So sieht eine günstige Lösung vor, daß das Isoliergehäuse in Richtung quer zu seiner Längsachse durch sein Anliegen an Wandbereichen der Ausnehmung festlegbar ist.

Vorteilhaft ist es ferner, wenn das Isoliergehäuse in Richtung seiner Längsachse durch an dem Kugelhals anliegende Formschlußelemente formschlüssig verankert ist.

Derartige an den Kugelhals anliegende Formschlußelemente können beispielsweise an einer Außenseite des Kugelhalses anliegende Formschlußelemente sein. Es ist aber auch denkbar, daß diese Formschlußelemente beiderseits eines Ringflansches anliegen, welcher beispielsweise dazu dient, die Ausnehmung zu begrenzen.

Derartige Formschlußelemente können einerseits fest auf dem Isoliergehäuse angeordnete Anschlagkörper sein und andererseits auf das Isoliergehäuse entweder durch Rastelemente gesicherte aufsteckbare oder aufschraubbare Formschlußelemente, wie beispielsweise Ringe oder ganze Teile des Isoliergehäuses, beispielsweise Bodenteile desselben.

Eine andere Lösung sieht vor, daß das Isoliergehäuse in Richtung quer zu seiner Längsachse durch die Ausnehmung und in Richtung seiner Längsachse durch Rastelemente formschlüssig in dem Kugelhals verankert ist.

Die Rastelemente können dabei an beliebiger Stelle angeordnet sein. Vorzugsweise sieht ein vorteilhaftes Ausführungsbeispiel vor, daß die Rastelemente in eine Wand der Ausnehmung eingreifen, wobei die Wand entsprechende Rastaufnehmungen aufweist.

Ferner ist vorzugsweise vorgesehen, daß das Isoliergehäuse drehfest an dem Kugelhals, beispielsweise ebenfalls durch die Formschlußelemente, fixiert ist.

Hinsichtlich der Ausbildung des Isoliergehäuses selbst wurden keine näheren Angaben gemacht. So wäre es beispielsweise denkbar, das Isoliergehäuse, insbesondere dessen Gehäusehülse becherähnlich auszuführen.

Eine besonders, insbesondere auch hinsichtlich der Montagefreundlichkeit vorteilhafte Lösung, welche insbesondere die begrenzte Erstreckung des Abschnitts des Kugelhalses in Längsrichtung des Isoliergehäuses konsequent ausnützt, sieht vor, daß das Isoliergehäuse auf einer dem Deckel gegenüberliegenden Seite mit einer Gehäusekappe verschließbar ist. Dabei ist insbesondere zur Montage der Kontakteinheit die Möglichkeit gegeben, die jeweils zu montierenden Teile besonders vorteilhaft, beispielsweise von beiden Seiten oder von der der Einstecköffnung gegenüberliegenden Seite in das Isoliergehäuse einzuführen. Dies gilt insbesondere für den Kontakteinsatz oder Komponenten desselben.

Die Gehäusekappe kann dabei in unterschiedlichster Art und Weise an dem Isoliergehäuse fixierbar sein.

Vorteilhafterweise ist die Gehäusekappe mit dem Isoliergehäuse verrastbar, oder mit einer Klebeverbindung verbindbar oder beispielsweise auch über eine Schraubverbindung.

Besonders günstig ist das Konzept der aufsetzbaren Gehäusekappe dann fortgeführt, wenn ein zur Kontakteinheit führendes Zuleitungskabel die Gehäusekappe durchsetzt. Insbesondere bei dieser Lösung läßt sich dabei das Zuleitungskabel relativ einfach mit der Kontakteinheit verbinden, und letztlich die Gehäusekappe als Abschluß auf diese aufsetzen.

Insbesondere ist es bei einer für eine erfindungsgemäße Kontakteinheit vorgesehenen Anhängekupplung vorteilhaft, wenn die Ausnehmung eine weitere Öffnung aufweist. Über diese zweite Zugänglichkeit der Ausnehmung lassen sich beispielsweise eine elektrische Zuleitung einfach realisieren oder auch die Fixierung des Isoliergehäuses in der Ausnehmung.

Besonders günstig ist es, wenn die beiden Öffnungen der Ausnehmung auf gegenüberliegenden Seiten des Kugelhalses angeordnet sind, so daß die Ausnehmung als den Kugelhals durchdringende Ausnehmung ausgebildet ist. Beispielsweise ist es in diesem Fall möglich, das Isoliergehäuse so anzuordnen, daß es beiderseits über die Öffnungen der Ausnehmung übersteht.

Diese Lösung läßt sich besonders günstig realisieren, wenn die sich zwischen den Öffnungen erstreckende Ausnehmung den Kugelhals mit im wesentlichen konstantem Querschnitt durchdringt, so daß auch die sich in der Ausnehmung erstreckende Form des Isoliergehäuses besonders einfach ausgebildet sein kann.

Alternativ dazu ist es denkbar, daß die eine Öffnung eine größere Querschnittsfläche aufweist als die andere Öffnung, eine Lösung die einerseits in einfacher Weise die Möglichkeit schafft, ein Zuleitungskabel einfach zuzuführen, andererseits jedoch einen noch besseren Schutz für die Kontakteinheit bietet.

Besonders günstig ist es bei dieser Lösung, wenn die Ausnehmung sich mit dem Querschnitt der größeren Öffnung in den Abschnitt des Kugelhalses hineinerstreckt und sich dann auf den Querschnitt der kleineren Öffnung verengt. Hierdurch ist bei einem möglichst großen Raum für die Kontakteinheit ein optimaler Schutz derselben gewährleistet.

Um die für die Realisierung elektrischer Kontakte und deren Anschlüsse an ein Zuleitungskabel notwendige Baulänge zu erreichen, ist vorzugsweise vorgesehen, daß das Isoliergehäuse über beide Öffnungen in Teilbereichen übersteht und somit hinsichtlich des Bauraums eine möglichst unauffällige Anordnung der Kontakteinheit möglich ist.

Eine besonders günstige Lösung sieht vor, daß über eine der Öffnungen ein elektrisches Zuleitungskabel zu dem Isoliergehäuse geführt ist, während im Bereich der anderen Öffnung der Deckel angeordnet ist.

Eine besonders einfache und insbesondere raumsparende Lösung sieht vor, daß das Isoliergehäuse in seinem sich in die Ausnehmung hineinerstreckenden Teilbereich eine Gehäusehülse mit zylindrischer Außenkontur aufweist.

Hinsichtlich der mechanischen Struktur und insbesondere der Ausbildung des Kugelhalses im Bereich des die Ausnehmung als integralen Bestandteil aufweisenden Abschnittes wurden bislang keine näheren Ausführungen gemacht. So wäre es beispielsweise denkbar, den Kugelhals so auszubilden, daß er die Ausnehmung beispielsweise soweit umgreift, daß eine ausreichende mechanische Fixierung des Isoliergehäuses in dieser möglich ist. Dies würde beispielsweise erforderlich machen, das Isoliergehäuse über mehr als die Hälfte seiner Form zu übergreifen oder auch die Ausnehmung so zu gestalten, daß sie zwar einen Teil des Isoliergehäuses aufweist aber beispielsweise noch zusätzlich in an diesem Isoliergehäuse vorgesehene Formschlußelemente eingreift, so daß ebenfalls ein vollständiges Umschließen des Isoliergehäuses nicht notwendig wäre.

Eine besonders günstige Lösung sieht jedoch vor, daß der Kugelhals in dem die Kontakteinheit tragenden Abschnitt eine die Ausnehmung ringförmig umschließende Form aufweist. Eine derartige Ausbildung des Kugelhalses hat den großen Vorteil, daß dadurch eine stabile und allseits geschlossene Struktur zur Verfügung steht, welche ihrerseits selbst ein Gehäuse für die Aufnahme des Isoliergehäuses bildet.

Um nun den Kugelhals so zu schaffen, daß in einfacher Weise in diesem die Ausnehmung angeordnet werden kann, ist vorzugsweise vorgesehen, daß eine untere Konturlinie des Kugelhalses im Bereich des die Kontakteinheit tragenden Abschnittes und diesem benachbarter Abschnitte kontinuierlich verläuft, das heißt vorzugsweise näherungsweise einer geradlinigen Konturlinie nahekommt.

Mit dieser Lösung wurde der Tatsache Rechnung getragen, daß eine Anhängekupplung ebenfalls eine Begrenzung der Bodenfreiheit eines Kraftfahrzeugs darstellen kann und somit seitens der Anhängekupplung die Bodenfreiheit des Kraftfahrzeugs möglichst wenig beeinträchtigt werden soll, so daß vorgesehen ist, die untere Konturlinie gegenüber herkömmlichen Anhängekupplungen möglichst unverändert zu belassen.

Ferner sieht eine vorteilhafte Form vor, daß eine obere Konturlinie des Kugelhalses im Bereich des die Kontakteinheit tragenden Abschnittes eine konvexe Form aufweist. Eine derartige Ausbildung schafft Raum für eine ausreichend große Ausnehmung und stellt andererseits sicher, daß die Ausnehmung vollständig vom Kugelhals umschlossen werden kann.

Besonders günstig ist es dabei, wenn die obere Konturlinie des Kugelhalses unterhalb einer in Höhe einer Unterkante des Kugelkopfes verlaufenden Horizontalen verläuft und somit ausgeschlossen werden kann, daß möglicherweise Kollisionen zwischen einer die Kupplungskugel übergreifenden Anhängekupplung und den die Kontakteinheit tragenden Abschnitt des Kugelhalses entstehen.

Mit einer derartigen Ausbildung des Kugelhalses im Bereich des die Kontakteinheit tragenden Abschnittes ist ein optimaler Schutz des Isoliergehäuses derselben gegeben.

Nach wie vor stellt jedoch der Deckel der Kontakteinheit einen kritischen Punkt dar, da der Deckel möglichst geschützt sein sollte, insbesondere gegen äußere mechanische Einwirkungen.

Besonders günstig ist es daher, wenn das Isoliergehäuse der Kontakteinheit so in der Ausnehmung angeordnet ist, daß sich der Deckel in einer zur Kugelhalskrümmungsebene parallelen Ebene oberhalb der unteren Konturlinie des Kugelhalses erstreckt, so daß der Kugelhals selbst mit seiner unteren Konturlinie einen Schutz auch für den Deckel darstellt, insbesondere in allen Fällen, in denen der Kugelhals dritte Gegenstände, beispielsweise auch den Boden, berührt, da in diesem Fall der Kugelhals zuerst mit der Konturlinie berührt und somit den Deckel gegen eine Berührung mit einem derartigen Drittgegenstand oder dem Boden schützt.

Ferner sieht eine vorteilhafte Lösung vor, daß sich der Deckel in einer zur Kugelhalskrümmungsebene parallelen Ebene unterhalb der oberen Konturlinie erstreckt und somit auch der Kugelhals selbst mit seiner oberen Konturlinie einen Schutz, beispielsweise gegen herabfallende Gegenstände, bietet.

Hinsichtlich der Führung der Zuleitungskabel zu der Kontakteinheit wurden im Zusammenhang mit der bisherigen Erläuterung der einzelnen Ausführungsbeispiele keine näheren Angaben gemacht. Beispielsweise kann das Zuleitungskabel frei hängend vom Kraftfahrzeug zu der Kontakteinheit geführt werden. Eine besonders sichere Führung des Zuleitungskabels, insbesondere auch, um dieses gegen Beschädigungen zu schützen sieht vor, daß ein zur Kontakteinheit für das Zuleitungskabel längs des Kugelhalses verläuft und dabei ebenfalls durch die obere Konturlinie und die untere Konturlinie des Kugelhalses geschützt ist.

Eine noch besserer Schutz des Zuleitungskabels ist dann gegeben, wenn dieses in einer längs des Kugelhalses laufenden Vertiefung verläuft, da in diesem Fall auch durch die Vertiefung ein Schutz gegen seitliche Einwirkungen gegen das Zuleitungskabel gegeben ist.

Bei all den bislang beschriebenen Ausführungsbeispielen kann der Kugelhals prinzipiell als starr am Kraftfahrzeug befestigter Kugelhals ausgebildet sein. Auch bei dieser Lösung bildet die erfindungsgemäße Lösung erhebliche Vorteile hinsichtlich der Zugänglichkeit der Kontakteinheit.

Noch drastischer wirken sich die Vorteile der erfindungsgemäßen Lösung dann aus, wenn der Kugelhals von einer aktiven Stellung in eine inaktive Stellung bringbar ist und somit selbst nicht stets in der aktiven Stellung verbleibt.

Dabei ist in der inaktiven Stellung mit der Bewegung des Kugelhalses in diese zwangsläufig auch eine Bewegung der Kontakteinheit in die inaktive Stellung gewährleistet, so daß in einfacher Weise die Kontakteinheit aus dem Sichtfeld des Benutzers des Kraftfahrzeugs gebracht und zusätzlich geschützt ist, wenn die Anhängekupplung in ihrer inaktiven Stellung steht. Beispielsweise wäre es möglich, dies auch bei einer abnehmbaren Kupplung zu realisieren.

Besonders vorteilhaft ist jedoch die erfindungsgemäße Lösung dann, wenn der Kugelhals von seiner aktiven in die inaktive Stellung verschwenkbar ist, so daß das Zuleitungskabel in diesem Fall lediglich der Schwenkbewegung des Kugelhalses folgen muß.

Weitere Merkmale und Vorteile der erfindungsgemäßen Lösung sind Gegenstand der nachfolgenden Beschreibung sowie der zeichnerischen Darstellung einiger Ausführungsbeispiele:

In der Zeichnung zeigen:
- Fig. 1: eine teilweise perspektivische Seitenansicht eines Kugelhalses einer Anhängekupplung für eine erfindungsgemäße Kontakteinheit;
- Fig. 2: eine Draufsicht in Richtung des Pfeils A in Fig. 1;
- Fig. 3: eine vergrößerte Seitenansicht des Kugelhalses gemäß Fig. 1 mit eingesetzter Kontakteinheit gemäß einem ersten Ausführungsbeispiel, welches nicht den Gegenstand des Anspruchs 1 zeigt;
- Fig. 4: einen Schnitt längs Linie 4-4 in Fig. 3;
- Fig. 5: eine Schnittdarstellung ähnlich Fig. 4 durch ein zweites Ausführungsbeispiel, welches nicht den Gegenstand des Anspruchs 1 zeigt;
- Fig. 6: einen Schnitt ähnlich Fig. 4 durch ein drittes Ausführungsbeispiel;
- Fig. 7: einen Schnitt längs Linie 7-7 in Fig. 6;
- Fig. 8: einen Schnitt ähnlich Fig. 4 durch ein viertes Ausführungsbeispiel, welches nicht den Gegenstand des Anspruchs 1 zeigt und
- Fig. 9: einen Schnitt ähnlich Fig. 4 durch ein fünftes Ausführungsbeispiel, welches nicht den Gegenstand des Anspruchs 1 zeigt.

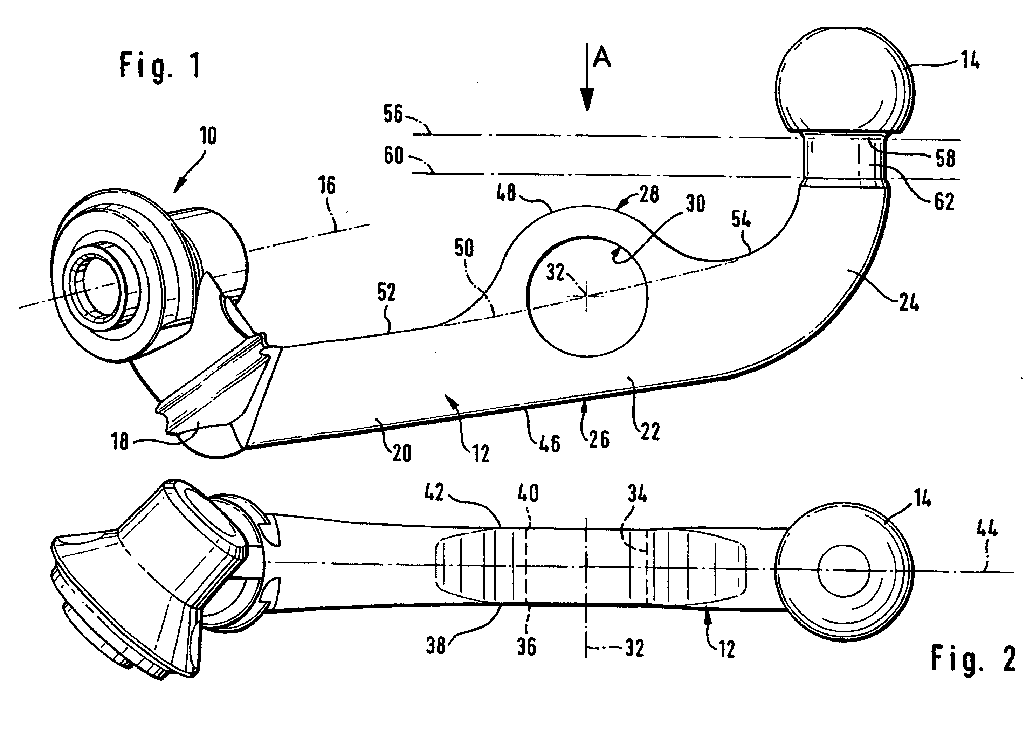

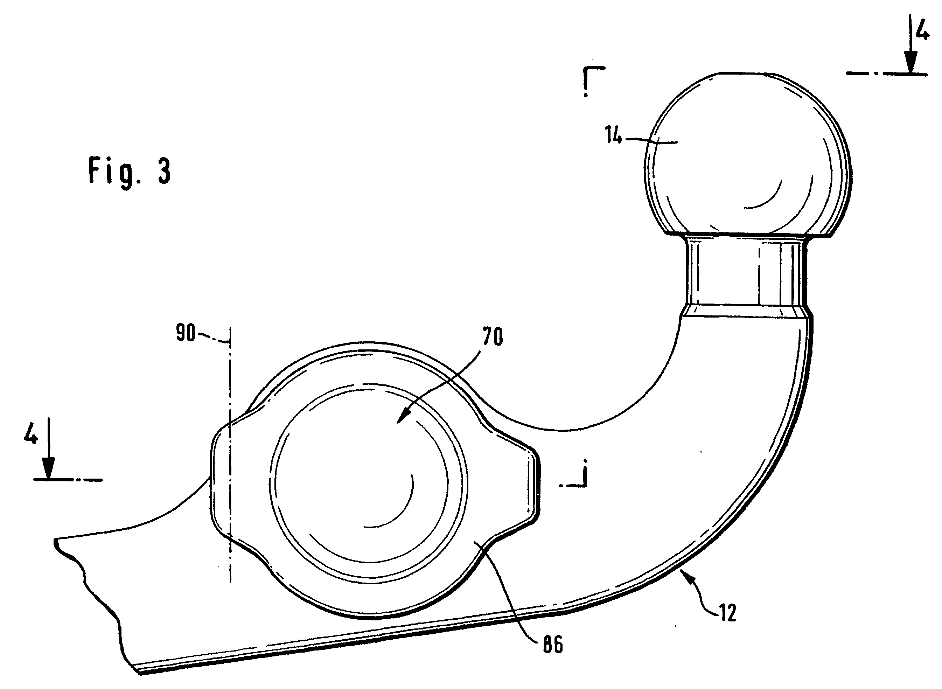

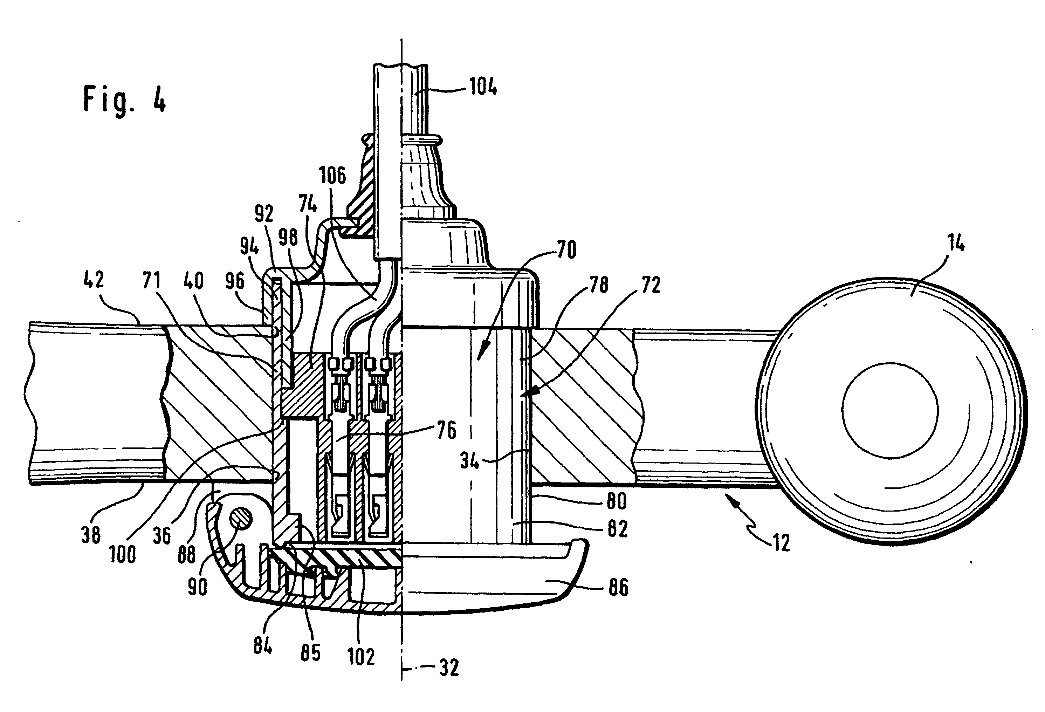

Eine für ein erstes Ausführungsbeispiel einer erfindungsgemäßen Kontakteinheit vorgesehene Anhängekupplung, dargestellt in Fig. 1 bis 4, insbesondere für Personenkraftfahrzeuge, umfaßt eine als Ganzes mit 10 bezeichnete Halterung, an welcher ein Kugelhals 12, welche eine Kupplungskugel 14 trägt, beispielsweise um eine Achse 16 schwenkbar gelagert ist. Die Achse 16 verläuft dabei so, wie in der deutschen Patentanmeldung 196 12 962.1-21 beschrieben, so daß bezüglich der schwenkbaren Lagerung des Kugelhalses 12 an der Halterung 10 vollinhaltlich auf die Ausführungen zur vorstehend genannten deutschen Patentanmeldung Bezug genommen wird.

Alternativ dazu kann die Halterung 10 aber auch so ausgebildet sein, daß sie den Kugelhals 12 starr hält oder so, daß der Kugelhals 12 abnehmbar in der Halterung 10 verankert ist.

Eine Halterung, in welcher der Kugelhals 12 abnehmbar gehalten ist, ist beispielsweise in der deutschen Patentanmeldung 196 13 428.5-21 beschrieben, auf welche diesbezüglich vollinhaltlich Bezug genommen wird.

Der sich zwischen der Halterung 10 und der Kupplungskugel 14 erstreckende Kugelhals 12 weist im Anschluß an die Halterung 10 einen ersten abgekröpften Abschnitt 18 auf, dann einen im wesentlichen gerade gerichteten Abschnitt 20, an diesen anschließend einen weiteren Abschnitt 22, an welchen sich ein zweiter gekröpfter Abschnitt 24 anschließt, der letztendlich an seinem Ende die Kupplungskugel 14 trägt.

In dem Abschnitt 22 weist der Kugelhals 12 einen unteren Schenkel 26 und einen oberen Schenkel 28 auf, welche eine Ausnehmung 30 ringförmig umschließen, wobei die Ausnehmung 30 vorzugsweise eine zu einer Querachse 32 kreiszylindrische Wandfläche 34 aufweist, die sich ausgehend von einer ersten Öffnung 36, welche auf einer Seite 38 des Kugelhalses liegt, durch den Abschnitt 22 hindurch erstreckt bis zu einer zweiten Öffnung 40, welche auf einer gegenüberliegenden Seite 42 des Kugelhalses liegt.

Dabei erstreckt sich die Querachse 32 quer, vorzugsweise senkrecht zu einer Krümmungsebene 44 des Kugelhalses und die Öffnungen 36 und 40 liegen ungefähr parallel zur Krümmungsebene 44, so daß die Seiten 38 und 42 Längsseiten des Kugelhalses 12 darstellen.

Ferner ist vorzugsweise der Schenkel 26 im Abschnitt 22 so ausgebildet, daß eine in der Krümmungsebene 44 liegende untere Kontur 46 des Kugelhalses 12 ausgehend von dem Abschnitt 20 über den Abschnitt 22 bis zum Beginn des Abschnitts 24 im wesentlichen längs einer Verbindungslinie zwischen der unteren Kontur des Abschnitts 20 und der unteren Kontur des Abschnitts 24 in unmittelbarem Anschluß an dem Abschnitt 22, vorzugsweise ungefähr als Gerade, verläuft, während eine obere in der Krümmungsebene 44 liegende Kontur 48 des Abschnitts 28, gebildet durch den Schenkel 28 desselben sich über eine Verbindungslinie 50 zwischen einer oberen Kontur 52 des Abschnitts 20 und einer oberen Kontur 54 des Abschnitts 24 in unmittelbarem Anschluß an den Abschnitt 22 erhebt. Die obere Kontur 48 liegt dabei vorzugsweise unterhalb einer Horizontalen 56, deren Höhe durch ein unteres Ende 58 der Kupplungskugel bestimmt ist, vorzugsweise sogar unterhalb einer Horizontalen 60 festgelegt durch eine endseitige Einschnürung 62 des Kugelhalses 12 in unmittelbarem Anschluß an die Kupplungskugel 14.

In die Ausnehmung 30 ist ein erstes Ausführungsbeispiel einer als Ganzes mit 70 bezeichnete erfindungsgemäßen Kontakteinheit eingesetzt, welche ein eine zylindrisch geformte Gehäusehülse 71 aufweisendes Isoliergehäuse 72 aufweist, in welchem ein Kontaktträger 74 fixiert ist, der seinerseits elektrische Kontakte 76, vorzugsweise Kontaktbuchsen, trägt.

Das Isoliergehäuse 72 erstreckt sich in seiner Längsrichtung koaxial zur Querachse 32 und liegt mit einem Teilbereich 78 einer Außenmantelfläche 80 seiner Gehäusehülse 71 an der zylindrischen Wandfläche 34 der Ausnehmung 30 an und wird durch diese parallel zur Querachse 30 ausgerichtet gehalten.

Das Isoliergehäuse 72 steht ferner mit seiner Gehäusehülse 71 über die Öffnung 36 mit einem Teilbereich 82 über und weist eine Einstecköffnung 84 für ein Kontaktelement, vorzugsweise einen Kontaktstecker auf, welche mit einem Deckel 86 verschließbar ist. Der Deckel 86 ist mittels eines Schwenklagers 88 an dem Isoliergehäuse 72 auf einer der Kupplungskugel 14 abgewandten Seite um eine Achse 90 schwenkbar gehalten, wobei die Achse 90 vorzugsweise ungefähr in vertikaler Richtung ausgerichtet ist. Das Schwenklager 88 steht dabei als Block über die Außenmantelfläche 80 der Gehäusehülse 71 im Teilbereich 82 über und ist vorzugsweise einstückig an das Isoliergehäuse 72 angeformt.

Das Schwenklager 88 liegt ferner an der Seite 38 des Kugelhalses 12 im Abschnitt 22 an und dient somit gleichzeitig als Fixierung des Isoliergehäuses 72 in einer ersten Richtung der Querachse 32 relativ zum Kugelhals 12.

Ferner ist das Isoliergehäuse 72 zusätzlich noch gegen eine Bewegung in einer entgegengesetzten zweiten Richtung parallel zur Querachse 32 relativ zum Kugelhals 12 dadurch fixiert, daß dieses auf seiner dem Deckel 86 gegenüberliegenden Seite mit einer Gehäusekappe 92 verschließbar ist, welche die Außenmantelfläche 80 des über die Öffnung 40 überstehenden Teilbereichs 94 der Gehäusehülse 71 mit einem hülsenähnlichen Ansatz 96 übergreift, welcher an der Seite 42 des Kugelhalses 12 anliegt. Durch den hülsenförmigen Ansatz 96 und das Schwenklager 88 ist somit das Isoliergehäuse 72 in Richtung der Querachse 32 unverschieblich relativ zum Abschnitt 22 des Kugelhalses 12 fixiert.

Vorzugsweise ist die Gehäusekappe 92 entweder auf das Isoliergehäuse 72 aufschraubbar oder aufsteckbar mit einer Klebeverbindung festlegbar oder mit diesem verrastbar.

Vorzugsweise weist die Gehäusekappe 92 noch einen in das Isoliergehäuse 72 eingreifenden Fortsatz 98 auf, welcher den Kontaktträger 74 gegen eine Bewegung in Richtung der Gehäusekappe 92 fixiert und dabei gleichzeitig vorzugsweise gegen eine Schulter 100 im Innern des Isoliergehäuses 72 anlegt.

Um dem Isoliergehäuse 72 einen möglichst kleinen Durchmesser zu verleihen, hat dieses eine radiale Erstreckung bezüglich der Querachse 32, welche ungefähr der Einstecköffnung 84 entspricht. Dabei hat die Einstecköffnung 84 einen Durchmesser, welcher einem Außendurchmesser eines Normsteckers entspricht und trägt einen Vorsprung 85, welcher mit einem Außengewindezug des Normsteckers zur Sicherung desselben in Eingriff bringbar ist. Ferner ist die von dem Deckel 86 überdeckte Einstecköffnung 84 noch dadurch gegen Schmutz und eindringendes Wasser verschließbar, daß der Deckel 86 an seiner Innenseite eine Dichtung 102 trägt, welche sich in radialer Richtung so weit erstreckt, daß sie an der Gehäusehülse 71 mit ihrem die Einstecköffnung umschließenden Rand anliegt.

Ein zur Kontakteinheit 70 führendes Zuleitungskabel 104 durchsetzt vorzugsweise die Gehäusekappe 92 und verläuft mit seinen einzelnen Adern 106 durch die Öffnung 40 zu den einzelnen elektrischen Kontakten 76 im Kontaktträger 74.

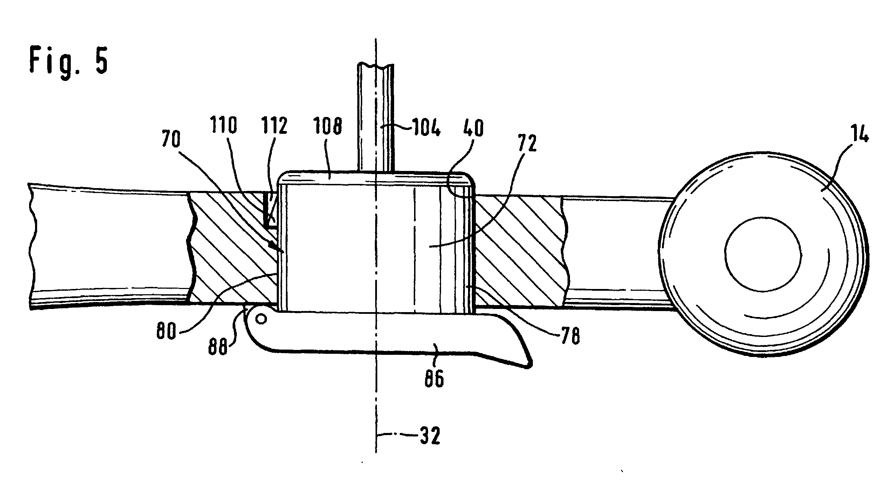

Bei einem zweiten Ausführungsbeispiel, dargestellt in Fig. 5, sind diejenigen Teile, die mit denen des Ausführungsbeispiels identisch sind, mit denselben Bezugszeichen versehen, so daß hinsichtlich der Beschreibung derselben vollinhaltlich auf die Ausführung zum ersten Ausführungsbeispiel Bezug genommen werden kann.

Im Gegensatz zum ersten Ausführungsbeispiel ist das Isoliergehäuse 72 der Kontakteinheit 70 auf seiner dem Deckel 86 gegenüberliegenden Seite mit einem Boden 108 verschlossen, welcher nicht radial über die Außenmantelfläche 80 der Gehäusehülse 71 des Isoliergehäuses 72 übersteht. Im Gegensatz dazu trägt die Außenmantelfläche 80 in ihrem in die Ausnehmung 30 eingreifenden Teilbereich 78 radial überstehende Rastnasen 110, welche mit entsprechend angeordneten Rastausnehmungen 112 in der Wandfläche 34 der Ausnehmung 30 in Eingriff bringbar sind und somit das Isoliergehäuse 72 gegen eine Bewegung in Richtung der Querachse 32 sichern, während die Sicherung des Isoliergehäuses 72 in die entgegengesetzte Richtung parallel zur Querachse 30 durch das Schwenklager 88 erfolgt. Ferner ist durch das Vorsehen der in die Rastausnehmungen 112 eingreifenden Rastelemente 110 gleichzeitig noch eine Verdrehsicherung des Isoliergehäuses 72 in der Ausnehmung 30 realisierbar.

Auch bei diesem Ausführungsbeispiel verläuft das Zuleitungskabel 104 durch den Boden 108 und somit durch die Öffnung 40 der Ausnehmung 30.

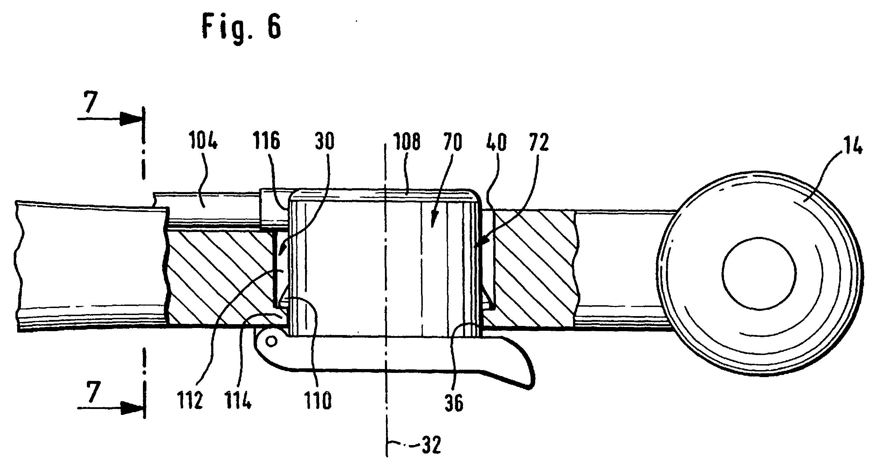

Bei einem dritten Ausführungsbeispiel der erfindungsgemäßen Kontakteinheit mit entsprechender Anhängekupplung, dargestellt in Fig. 6, ist das Isoliergehäuse 72 der Kontakteinheit 70 in gleicher Weise wie beim ersten Ausführungsbeispiel in der Ausnehmung 30 verankert, allerdings erstrecken sich die Rastausnehmungen 112 der Ausnehmung 30 von der Öffnung 40 derselben ausgehend parallel zur Querachse 32 tief in die Ausnehmung 30 hinein, so daß zwischen der Öffnung 36 und dem Rastelement 110 ein dünnes Wandstück 114 als Gegenlager für das Rastelement 110 dient.

Ferner ist vorzugsweise das Zuleitungskabel 104 nicht durch den Boden 108 in das Isoliergehäuse 72 eingeführt, sondern über einen Teilbereich 116 des Isoliergehäuses 72, welcher sich unmittelbar an den Boden 108 anschließt, so daß in diesem Fall das Zuleitungskabel 104 im wesentlichen quer oder schräg zur Querachse 32 in das Isoliergehäuse 72 eintritt.

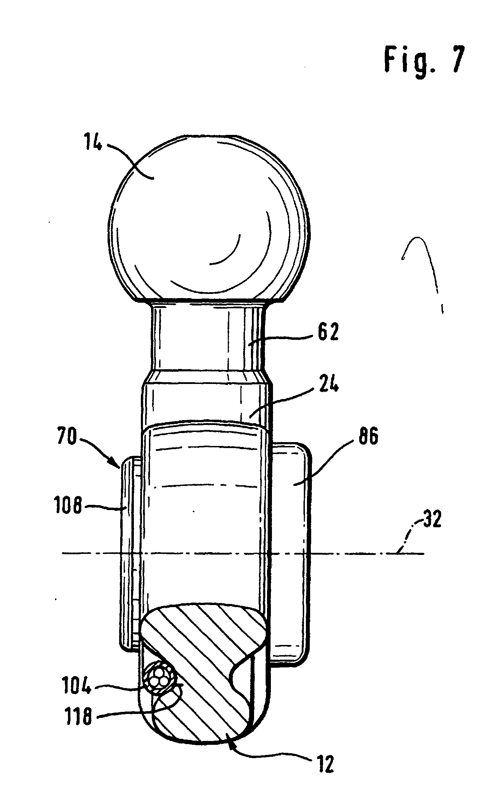

In diesem Fall läßt sich das Zuleitungskabel wie in Fig. 7 dargestellt, in einer Nut 118 des Kugelhalses 12, welches sich längs des Abschnitts 20 desselben erstreckt, unmittelbar in das Isoliergehäuse 72 einführen.

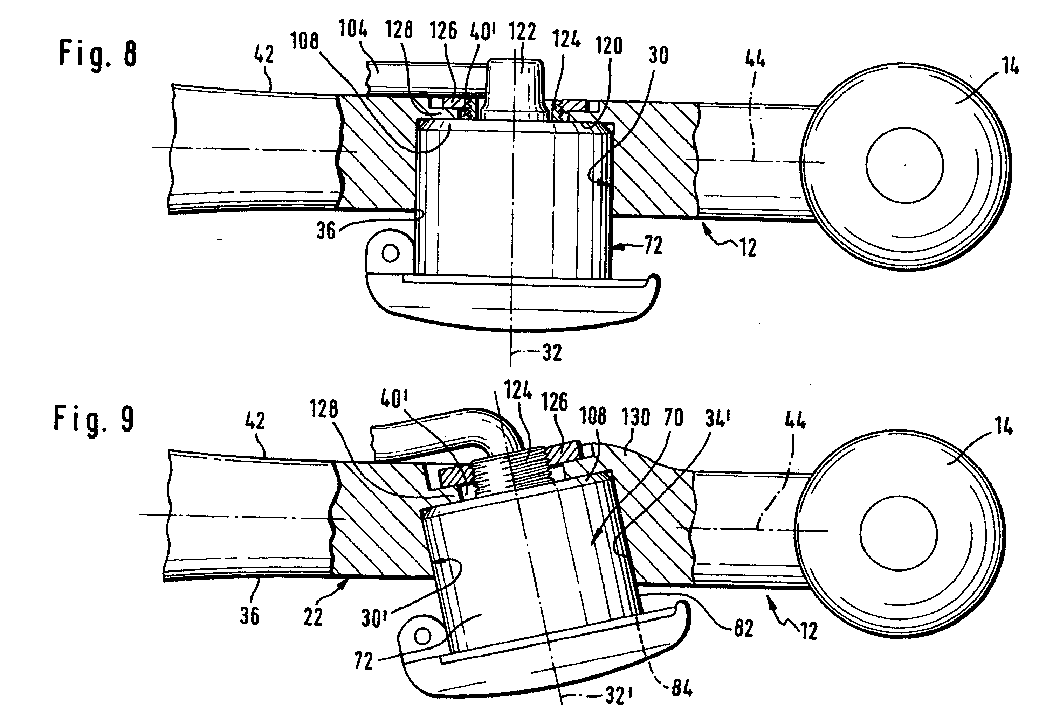

Bei einem vierten Ausführungsbeispiel der erfindungsgemäßen Kontakteinheit mit entsprechender Anhängekupplung, dargestellt in Fig. 8, ist die Ausnehmung 30 stufenförmig ausgebildet, d.h. diese erstreckt sich ausgehend von der Öffnung 36 mit einem im wesentlichen zylindrischen Querschnitt in den Abschnitt 22 des Kugelhalses 12 hinein, bis zu einer die Öffnung 40' umgebenden Ringflanschfläche 120, so daß die Öffnung 40' einen kleineren Querschnitt aufweist als die Öffnung 36.

Die Zuführung des Zuleitungskabels 104 erfolgt jedoch nach wie vor über einen die Öffnung 40' durchgreifenden Stutzen 122 des Isoliergehäuses 72, wobei sich der Stutzen 122 über den Boden 108 des Isoliergehäuses 72 hinaus erstreckt.

Zur Fixierung ist der Boden 108 des Isoliergehäuses 72 mit einer durch die Öffnung 40' hindurch bis zur Seite 42 erstreckenden Gewindehülse 124 versehen, auf welche ein radial überstehender Befestigungsring 126 aufschraubbar ist, der seinerseits gegen einen die Öffnung 40' begrenzenden Ringflansch 128 wirkt, so daß die Fixierung des Isoliergehäuses 72 letztlich dadurch erfolgt, daß einerseits der Boden 108 an der der Ausnehmung 30 zugewandten Ringflanschfläche 12 des Ringflansches 128 anliegt und andererseits der Gewindering 126 an einer gegenüberliegenden Seite und somit letztlich der Boden 108 gegen den die Ausnehmung 30 stufenförmig verengenden Ringflansch 128 gezogen ist.

Bei einem fünften Ausführungsbeispiel, dargestellt in Fig. 9, sind diejenigen Teile, die mit denen der voranstehenden Ausführungsbeispiele identisch sind, mit denselben Bezugszeichen versehen, so daß hinsichtlich der Beschreibung derselben auf die Ausführungen zu den voranstehenden Ausführungsbeispielen Bezug genommen werden kann.

Beim fünften Ausführungsbeispiel gemäß Fig. 9 ist im Gegensatz zu den voranstehenden Ausführungsbeispielen die Kontakteinheit 70 in eine Ausnehmung 30' eingesetzt, deren zylindrische Wandflächen 34' koaxial zu einer Querachse 32' verlaufen, die in diesem Fall nicht senkrecht auf der Krümmungsebene 44 des Kugelhalses 12 stehen, sondern mit dieser einen Winkel von kleiner 90° einschließt. Vorzugsweise ist dabei die Querachse 32 in Richtung der Kupplungskugel 14 geneigt, so daß der Winkel von kleiner 90° zwischen der Querachse 32' und dem den Abschnitt 24 des Kugelhalses 12 durchsetzenden Bereich der Krümmungsebene 44 auftritt. Damit ist die Zugänglichkeit der Kontakteinheit 70 noch weiter verbessert, nämlich dadurch daß die Einstecköffnung 84 in Fahrtrichtung des Kraftfahrzeugs gesehen nach hinten gewandt und somit leichter zugänglich ist.

Die Befestigung des Isoliergehäuses 72 erfolgt bei diesem Ausführungsbeispiel in gleicher Weise wie beim fünften Ausführungsbeispiel, nämlich durch einen Gewindering 126 und einen vom Abschnitt 22 des Kugelhalses 12 gebildeten und die Öffnung 40' begrenzenden Ringflansch 128, gegen welchen der Boden 108 des Isoliergehäuses 72 durch den Gewindering 126 gezogen ist.

Im Gegensatz zu den voranstehenden Ausführungsbeispielen ist der Kugelhals bei diesem Ausführungsbeispiel in seinem Abschnitt 22 auf der Seite 42 mit einer bezüglich der Krümmungsebene 44 asymmetrischen Verdickung 130 versehen, welche es erlaubt, die Ausnehmung 30 mit einer ausreichenden Tiefe auszubilden, um zu verhindern, daß das Isoliergehäuse 72 mit seinem Teilbereich 82 auf der Seite 36 zu weit über den Kugelhals im Bereich des Abschnitts 22 übersteht.

Bei allen erfindungsgemäß beschriebenen Ausführungsbeispielen ist der die Ausnehmung 30 umgebende untere Schenkel 26 so dick ausgeführt, daß der Deckel 86 mit seiner Ausdehnung in Richtungen parallel zur Krümmungsebene 44 stets oberhalb der unteren Kontur 46 des Kugelhalses 12 im Abschnitt 22 liegt.

Ferner ist auch der Schenkel 28 so dick ausgeführt, daß der Deckel 86 mit seiner Ausdehnung in Richtung parallel zur Krümmungsebene 44 stets unterhalb der oberen Kontur 48 des Kugelhalses im Abschnitt 22 liegt.

Damit erfährt der Deckel stets durch den massiv ausgeführten Kugelhals 12 einen Schutz gegen eine Beschädigung in all den Fällen, in denen ein Drittgegenstand die untere Kontur oder die obere Kontur des Kugelhalses 12 berührt.

## Patentansprüche

1. Baugruppe, umfassend einen Kugelhals (12) für eine Anhängekupplung für Kraftfahrzeuge, insbesondere Personenkraftfahrzeuge, der in einem zwischen einer Halterung (10) und einer Kupplungskugel (14) liegenden Abschnitt (22) mit einer Ausnehmung (30) versehen ist, und eine Kontakteinheit (70), welche von einer seitlich des Kugelhalses (12) liegenden Öffnung (36) in den Abschnitt (22) eindringt und welche mit einer Einstecköffnung (84), mit einem Deckel (86) zum Verschließen der Einstecköffnung (84) versehen ist, **dadurch gekennzeichnet, daß** die Kontakteinheit (70) ein Isoliergehäuse (72) und einen in dem Isoliergehäuse (72) angeordneten sowie elektrische Kontakte (76) tragenden Kontakteinsatz (74) aufweist, daß das Isoliergehäuse (72) so ausgebildet ist, daß es zumindest mit einem Teilbereich (78) in die Ausnehmung (30) einsetzbar ist, und daß ein Zuleitungskabel (104) im wesentlichen quer oder schräg zu einer quer zur Krümmungsebene (44) des Kugelhalses 12) verlaufenden Querachse (32) in das Isoliergehäuse (72) eintritt.

2. Baugruppe nach Anspruch 1 oder 2, **dadurch gekennzeichnet, daß** das Isoliergehäuse (72) einen den Deckel (86) tragenden Teilbereich (82) aufweist, welcher in Fortsetzung des in die Ausnehmung (30) einsetzbaren Teilbereichs (78) angeordnet ist.

3. Baugruppe nach Anspruch 1 oder 2, **dadurch gekennzeichnet, daß** das Isoliergehäuse (72) in dem in die Ausnehmung (30) einsetzbaren Teilbereich (78) eine Außenmantelfläche (80) aufweist, welche beim Einsetzen in die Ausnehmung (30) an deren Wandfläche (34) anlegbar ist.

4. Baugruppe nach einem der voranstehenden Ansprüche, **dadurch gekennzeichnet, daß** das Isoliergehäuse (72) ein Schwenklager (88) für den Deckel (86) aufweist, welches radial über die Außenmantelfläche (80) übersteht.

5. Baugruppe nach einem der voranstehenden Ansprüche, **dadurch gekennzeichnet, daß** das Isoliergehäuse (72) in seinem in die Ausnehmung (30) einsetzbaren Teilbereich (78) eine Gehäusehülse (71) aufweist.

6. Baugruppe nach Anspruch 5, **dadurch gekennzeichnet, daß** die Gehäusehülse (71) eine zylindrische Außenkontur aufweist.

7. Baugruppe nach einem der Ansprüche 3 bis 6, **dadurch gekennzeichnet, daß** die Gehäusehülse (71) des Isoliergehäuses (72) die Außenmantelfläche (80) bildet.

8. Baugruppe nach einem der Ansprüche 5 bis 7, **dadurch gekennzeichnet, daß** die Gehäusehülse (71) sich zu dem den Deckel (86) tragenden Teilbereich (82) erstreckt.

9. Baugruppe nach Anspruch 8, **dadurch gekennzeichnet, daß** die Gehäusehülse (71) in dem den Deckel (86) tragenden Teilbereich (82) auf ihrer Außenseite das Schwenklager (88) für den Deckel (86) trägt.

10. Baugruppe nach Anspruch 9, **dadurch gekennzeichnet, daß** das Schwenklager (88) für den Deckel (86) einstückig an das Isoliergehäuse (72) angeformt ist.

11. Baugruppe nach einem der Ansprüche 5 bis 10, **dadurch gekennzeichnet, daß** ein Außendurchmesser der Gehäusehülse (71) ungefähr einem Durchmesser der Einstecköffnung (84) entspricht.

12. Baugruppe nach einem der Ansprüche 8 bis 11, **dadurch gekennzeichnet, daß** die Gehäusehülse (71) einen die Einstecköffnung (84) umschließenden Rand bildet, an welchem eine Dichtung (102) des Deckels (86) anlegbar ist.

13. Baugruppe nach einem der voranstehenden Ansprüche, **dadurch gekennzeichnet, daß** der in die Ausnehmung (30) einsetzbare Teilbereich (78) des Isoliergehäuses eine Länge aufweist, welche mindestens die Hälfte der axialen Länge des Isoliergehäuses (72) beträgt.

14. Baugruppe nach Anspruch 13, **dadurch gekennzeichnet, daß** das Isoliergehäuse (72) eine derartige axiale Länge aufweist, daß dieses beiderseits der Ausnehmung (30) über diese übersteht.

15. Baugruppe nach Anspruch 13 oder 14, **dadurch gekennzeichnet, daß** das Isoliergehäuse (72) beiderseits über den in die Ausnehmung (30) einsetzbaren Teilbereich (78) überstehende Teilbereiche (82, 94) aufweist.

16. Baugruppe nach einem der voranstehenden Ansprüche, **dadurch gekennzeichnet, daß** das Isoliergehäuse (72) formschlüssig an dem Kugelhals (12) verankerbar ist.

17. Baugruppe nach einem der voranstehenden Ansprüche, **dadurch gekennzeichnet, daß** das Isoliergehäuse (72) in Richtung quer zu seiner Längsachse (32) durch ein Anlegen an Wandbereichen der Ausnehmung (30) formschlüssig an dem Kugelhals (12) festlegbar ist.

18. Baugruppe nach Anspruch 16 oder 17, **dadurch gekennzeichnet, daß** das Isoliergehäuse (72) in Richtung seiner Längsachse (32) durch an dem Kugelhals (12) anliegende Formschlußelemente (88, 96; 108, 126) formschlüssig verankert ist.

19. Baugruppe nach einem der voranstehenden Ansprüche, **dadurch gekennzeichnet, daß** das Isoliergehäuse (72) auf einer dem Deckel (86) gegenüberliegenden Seite mit einer Gehäusekappe (92) verschließbar ist.

20. Baugruppe nach Anspruch 19, **dadurch gekennzeichnet, daß** die Gehäusekappe (92) mit dem Isoliergehäuse (72) verrastbar ist.

21. Baugruppe nach Anspruch 19, **dadurch gekennzeichnet, daß** die Gehäusekappe (92) mit dem Isoliergehäuse (72) mittels einer Klebeverbindung verbindbar ist.

22. Baugruppe nach Anspruch 19, **dadurch gekennzeichnet, daß** die Gehäusekappe (92) mit dem Isoliergehäuse (72) mittels einer Schraubverbindung verbindbar ist.

23. Baugruppe nach einem der Ansprüche 19 bis 22, **dadurch gekennzeichnet, daß** ein zur Kontakteinheit (70) führendes Zuleitungskabel (104) die Gehäusekappe durchsetzt.

## Claims

1. Subassembly, comprising a ball neck (12) for a trailer coupling for motor vehicles, in particular passenger vehicles, which is provided with a recess (30) in a portion (22) lying between a holder (10) and a coupling ball (14), and a contact unit (70), which penetrates into the portion (22) from an opening (36) lying to the side of the ball neck (12) and is provided with a push-in opening (84), with a cover (86) for closing the push-in opening (84), **characterised in that** the contact unit (70) comprises an insulating housing (72) and a contact insert (74), which is disposed in the insulating housing (72) and bears electrical contacts (76), that the insulating housing (72) is formed such that it can be inserted at least with a subregion (78) in the recess (30), and that a supply cable (104) enters the insulating housing (72) substantially transversely or obliquely to a transverse axis (32) extending transversely to the plane of curvature (44) of the ball neck (12).

2. Subassembly according to Claim 1 or 2, **characterised in that** the insulating housing (72) comprises a subregion (82) which bears the cover (86) and is disposed in a prolongation of the subregion (78) which can be inserted in the recess (30).

3. Subassembly according to Claim 1 or 2, **characterised in that**, in the subregion (78) which can be inserted in the recess (30), the insulating housing (72) comprises an external lateral surface (80) which, when inserted in the recess (30), can engage the wall surface (34) thereof.

4. Subassembly according to any one of the preceding Claims, **characterised in that** the insulating hosing (72) comprises a pivot bearing (88), which projects radially beyond the external lateral surface (80), for the cover (86).

5. Subassembly according to any one of the preceding Claims, **characterised in that** the insulating housing (72) comprises a housing sleeve (71) in its subregion (78) which can be inserted in the recess (30).

6. Subassembly according to Claim 5, **characterised in that** the housing sleeve (71) has a cylindrical outer contour.

7. Subassembly according to any one of Claims 3 to 6, **characterised in that** the housing sleeve (71) of the insulating housing (72) forms the external lateral surface (80).

8. Subassembly according to any one of Claims 5 to 7, **characterised in that** the housing sleeve (71) extends to the subregion (82) bearing the cover (86).

9. Subassembly according to Claim 8, **characterised in that**, in the subregion (82) which bears the cover (86),.the housing sleeve (71) bears on its outside the pivot bearing (88) for the cover (86).

10. Subassembly according to Claim 9, **characterised in that** the pivot bearing (88) for the cover (86) is moulded integrally onto the insulating housing (72).

11. Subassembly according to any one of Claims 5 to 10, **characterised in that** an outside diameter of the housing sleeve (71) corresponds approximately to a diameter of the push-in opening (84).

12. Subassembly according to any one of Claims 8 to 11, **characterised in that** the housing sleeve (71) forms a rim which surrounds the push-in opening (84) and which a seal (102) of the cover (86) can engage.

13. Subassembly according to any one of the preceding Claims, **characterised in that** the subregion (78) of the insulating housing which can be inserted in the recess (30) is of a length which constitutes at least half of the axial length of the insulating housing (72).

14. Subassembly according to Claim 13, **characterised in that** the axial length of the insulating housing (72) is such that this projects beyond the recess (30) on both sides.

15. Subassembly according to Claim 13 or 14, **characterised in that** the insulating housing (72) comprises subregions (82, 94) projecting on both sides beyond the subregion (78) which can be inserted in the recess (30).

16. Subassembly according to any one of the preceding Claims, **characterised in that** the insulating housing (72) can be fixed positively to the ball neck (12).

17. Subassembly according to any one of the preceding Claims, **characterised in that** the insulating housing (72) can be fixed positively to the ball neck (12) in the direction transverse to its longitudinal axis (32) by engaging wall regions of the recess (30).

18. Subassembly according to Claim 16 or 17, **characterised in that** the insulating housing (72) is fixed positively in the direction of its longitudinal axis (32) by positive-fitting elements (88, 96; 108, 126) lying against the ball neck (12).

19. Subassembly according to any one of the preceding Claims, **characterised in that** the insulating housing (72) can be closed on a side lying opposite the cover (86) by a housing cap (92).

20. Subassembly according to Claim 19, **characterised in that** the housing cap (92) can be locked to the insulating housing (72).

21. Subassembly according to Claim 19, **characterised in that** the housing cap (92) can be connected to the insulating housing (72) by means of an adhesive joint.

22. Subassembly according to Claim 19, **characterised in that** the housing cap (92) can be connected to the insulating housing (72) by means of a screwed joint.

23. Subassembly according to any one of Claims 19 to 22, **characterised in that** a supply cable (104) leading to the contact unit (70) passes through the housing cap.

## Revendications

1. Sous-groupe, comportant un col (12) de boule, pour une remorque d'attelage pour véhicules motorisés, en particulier pour véhicules de tourisme, col (12) qui présente un évidement (30) sur un tronçon (22) situé entre un support (10) et une boule d'attelage (14), ainsi qu'un organe de contact (70) qui pénètre dans le tronçon (22) par une ouverture (36) située sur le côté du col (12) et qui présente une ouverture d'enfichage (84), avec un couvercle (86) pour obturer l'ouverture d'enfichage (84), **caractérisé par le fait que** l'organe de contact (70) présente une enveloppe isolante (72) et un porte-contact (74) qui est disposé dans l'enveloppe isolante (72) et porte des contacts électriques (76), que l'enveloppe isolante (72) est conçue de façon à pouvoir s'insérer au moins par une zone partielle (78) dans l'évidement (30) et qu'un câble (104) d'alimentation pénètre dans l'enveloppe isolante (72) sensiblement transversalement ou obliquement par rapport à un axe transversal (32) orienté transversalement par rapport au plan de courbure (44) du col (12).

2. Sous-groupe selon la revendication 1 ou 2, **caractérisé par le fait que** l'enveloppe isolante (72) présente une zone partielle (82) qui porte le couvercle (86) et qui est disposée dans le prolongement de la zone partielle (78) qui peut s'insérer dans l'évidement (30).

3. Sous-groupe selon la revendication 1 ou 2, **caractérisé par le fait que** l'enveloppe isolante (72) présente, dans la zone partielle (78) qui peut s'insérer dans l'évidement (30), une surface latérale extérieure (80) qui, lors de l'insertion dans l'évidement (30), peut s'appliquer contre sa surface de paroi (34) de celui-ci.

4. Sous-groupe selon l'une des revendications précédentes, **caractérisé par le fait que** l'enveloppe isolante (72) présente pour le couvercle (86) un palier de pivotement (88) qui dépasse radialement au-delà de la surface latérale extérieure (80).

5. Sous-groupe selon l'une des revendications précédentes, **caractérisé par le fait que** l'enveloppe isolante (72) présente un manchon (71) dans sa zone partielle (78) qui peut s'insérer dans l'évidement (30).

6. Sous-groupe selon la revendication 5, **caractérisé par le fait que** le manchon (71) présente un contour extérieur cylindrique.

7. Sous-groupe selon l'une des revendications 3 à 6, **caractérisé par le fait que** le manchon (71) de l'enveloppe isolante (72) forme la surface latérale extérieure (80).

8. Sous-groupe selon l'une des revendications 5 à 7, **caractérisé par le fait que** le manchon (71) s'étend jusqu'à la zone partielle (82) qui porte le couvercle (86).

9. Sous-groupe selon la revendication 8, **caractérisé par le fait que** le manchon (71) porte, dans la zone partielle (82) portant le couvercle (86), sur sa face extérieure, le palier de pivotement (88) pour le couvercle (86).

10. Sous-groupe selon la revendication 9, **caractérisé par le fait que** le palier de pivotement (88) pour le couvercle (86) est formé d'une seule pièce sur l'enveloppe isolante (72).

11. Sous-groupe selon l'une des revendications 5 à 10, **caractérisé par le fait qu'**un diamètre extérieur du manchon (71) correspond à peu près à un diamètre de l'ouverture d'enfichage (84).

12. Sous-groupe selon l'une des revendications 8 à 11, **caractérisé par le fait que** le manchon (71) forme un bord qui entoure l'ouverture d'enfichage (84) et contre lequel peut s'appliquer une garniture d'étanchéité (102) du couvercle (86).

13. Sous-groupe selon l'une des revendications précédentes, **caractérisé par le fait que** la zone partielle (78) de l'enveloppe isolante qui peul s'insérer dans l'évidement (30) présente une longueur qui vaut au moins la moitié de la longueur axiale de l'enveloppe isolante (72).

14. Sous-groupe selon la revendication 13, **caractérisé par le fait que** l'enveloppe isolante (72) présente une longueur axiale telle que, des deux côtés de l'évidement (30), elle dépasse au-delà de cet évidement.

15. Sous-groupe selon la revendication 13 ou 14, **caractérisé par le fait que** l'enveloppe isolante (72) présente, des deux côtés, des zones partielles (82, 94) qui dépassent au-delà de la zone partielle (78) qui peut s'insérer dans l'évidement (30).

16. Sous-groupe selon l'une des revendications précédentes, **caractérisé par le fait que** l'enveloppe isolante (72) peut s'ancrer par complémentarité de forme sur le col (12).

17. Sous-groupe selon l'une des revendications précédentes, **caractérisé par le fait que** l'enveloppe isolante (72) peut se fixer sur le col (12) par complémentarité de forme, selon une direction transversale à son axe longitudinal (32), en s'appliquant contre les zones de paroi de l'évidement (30).

18. Sous-groupe selon la revendication 16 ou 17, **caractérisé par le fait que** l'enveloppe isolante (72) est ancrée, par complémentarité de forme, selon la direction de son axe longitudinal (32), par des éléments de complémentarité de forme (88, 96 ; 108, 126) qui s'appuient contre le col (12).

19. Sous-groupe selon l'une des revendications précédentes, **caractérisé par le fait que** l'enveloppe isolante (72) peut, d'un côté opposé au couvercle (86), s'obturer avec un capuchon (92).

20. Sous-groupe selon la revendication 19, **caractérisé par le fait que** le capuchon (92) peut s'encliqueter avec l'enveloppe isolante (72).

21. Sous-groupe selon la revendication 19, **caractérisé par le fait que** le capuchon (92) peut se relier à l'enveloppe isolante (72) au moyen d'une liaison par collage.

22. Sous-groupe selon la revendication 19, **caractérisé par le fait que** le capuchon (92) peut se relier à l'enveloppe isolante (72) au moyen d'une liaison par vissage.

23. Sous-groupe selon l'une des revendications 19 à 22, **caractérisé par le fait qu'**un câble (104), d'alimentation à l'organe de contact (70), traverse le capuchon.
